(19)

Europäisches Patentamt

European Patent Office

Office européen des brevets

(11) **EP 3 614 531 A1**

(12) **EUROPEAN PATENT APPLICATION**

(43) Date of publication:
**26.02.2020 Bulletin 2020/09**

(21) Application number: **18190025.9**

(22) Date of filing: **21.08.2018**

(51) Int Cl.:
**H02K 1/16** (2006.01)          **H02K 1/18** (2006.01)
**H02K 15/02** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **youWINenergy GmbH**
**27568 Bremerhaven (DE)**

(72) Inventor: **ROHDEN, Rolf**
**26607 Aurich (DE)**

(74) Representative: **Bird & Bird LLP**
**Maximiliansplatz 22**
**80333 München (DE)**

(54) **ELECTRICAL ROTATING MACHINE AND METHOD TO MANUFACTURE AN ELECTRICAL ROTATING MACHINE**

(57)    An electrical rotating machine arranged for a power plant or for driving a rotatable machine part, the electrical rotating machine having a rotor and a stator, wherein the rotor is arranged to be driven to rotate relative to the stator. The stator comprises an essentially cylindrical stator body extending along a longitudinal axis A and one or more guiding elements. At least one of the guiding elements extends along an arc B of a circular helix, the helix extending along axis A. The at least one guiding element is materially or mechanically connected with an inner or outer surface of the stator body. Further, the electrical rotating machine has several curved stator sheets, each having a guiding slot accepting one of the guiding elements. A second of the stator sheets is arranged between a first and a third of the stator sheets and touches the first and third stator sheets.

FIG 1

EP 3 614 531 A1

**Description**

The present invention relates to an electrical rotating machine arranged for a power plant or for driving rotating applications and a method to manufacture an electrical rotating machine which is arranged for a power plant or for driving rotating applications. The invention can be used advantageously for a new power plant and for refurbishing an existing power plant. The electrical rotating machine is particularly suitable for a wind turbine installation and for being driven by diesel engine, a gas turbine or a water turbine. The electric rotating machine is particularly suitable for driving rotating applications in superordinate machines and equipment.

Applicant knows of a method for producing a stator by stacking curved lamellae, which have conductor slots in their inner edges. The lamellae are stacked in a stacking guide having a skew angle and are given a skew equal to the skew angle. Thereby, a stack extending along axis A is formed. Guide elements are machined in an exterior surface of the stack parallel to axis A. The stack is installed in a stator frame having guide members. The guide members of the stator frame engage with the guide elements of the stack.

Problem and solution

It is an object of the invention to provide an improved electrical rotating machine.

This object is solved by the electrical rotating machine as explained by claim 1 (first aspect) and the method according to claim 14 (second aspect) to manufacture an electrical rotating machine. Preferred embodiments form the subject matter of the dependent claims.

The electrical rotating machine according to the first aspect is arranged for a power plant or for driving rotating applications. The rotating machine has a rotor and a stator, wherein the rotor is arranged to be driven to rotate relative to the stator, particularly by a rotational engine of the power plant, particularly by a rotor blade of the wind turbine installation. The stator comprises an essentially cylindrical stator body extending along a longitudinal axis A and one or more guiding elements. At least one of the guiding elements extends along an arc B of a circular helix, which extends along axis A, particularly having a helix angle $\alpha$. The at least one guiding element is materially or mechanically connected with an inner or outer surface of the stator body. Further, the electrical rotating machine has several curved stator sheets, each having one or more guiding slots each accepting one of the guiding elements. A second of the stator sheets is arranged between a first and a third of the stator sheets and touches or abuts on the first and third stator sheets.

The method according to the second aspect serves to manufacture an electrical rotating machine arranged for a power plant or for a wind turbine installation, preferably to manufacture an electrical rotating machine according to the first aspect. The electrical rotating machine has a rotor and a stator. The rotor is arranged to be driven to rotate relative to the stator, particularly by a rotational engine of the power plant, particularly by a rotor blade of the wind turbine installation. The method includes the following steps:

S1 providing an essentially cylindrical stator body, extending along a longitudinal axis A,

S2 materially or mechanically connecting a guiding element with an inner or outer surface of the stator body, the guiding element being extending along an arc B of a circular helix, the circular helix extending along axis A, particularly having a helix angle $\alpha$,

S3 arranging several curved stator sheets, each stator sheet having one or more guiding slots each arranged for accepting the guiding element, such that a second of the stator sheets is arranged between a first and a third of the stator sheets and touches the first and third stator sheets, and the respective guiding slot accepts the guiding element.

The method may serve to manufacture an electrical rotating machine according to the first aspect.

The one or more guiding elements connected to the stator body may simplify arranging the second stator sheet between the first and third stator sheet. The guiding elements can have the shape of an essentially curved bar. The at least one guiding element can also serve to achieve and maintain the intended skew or relative position of the second stator sheet between the first and third stator sheet. A skewed stack formed from the stator sheets with the guiding element and extending along arc B can remain on the stator body. This may improve the quality of the electrical rotating machine, reduce the cost and/or reduce torque variations. The limited helix angle may contribute to easier mounting of stator windings.

Within the concept of the present invention, a circular helix extends along axis A and has a constant radius. The helix is represented by the vector function r(t):

$$\mathbf{r}(t) = a * \cos (t * \mathbf{i}) + a * \sin (t * \mathbf{j}) + c * t * \mathbf{k}$$

The vectors **i** and **j** are perpendicular to each other, vector **k** is perpendicular to the plane including vectors **i and j,** and factors a, c are constant. Thus, a tangent line at any point of the helix makes a constant angle with axis A, which constant angle is called the helix angle $\alpha$. Each of the guiding elements extends along or follows an arc B of the circular helix.

Within the concept of the present invention, a stator sheet is arranged to abut on an inner or outer surface of the stator body. The stator sheet is also arranged to support and hold stator windings. Each of the stator sheets can have the shape of an annular segment. Curved first and second surfaces of the stator sheets can be concentric. The curved stator sheets can be arranged and shaped such that the centres of the curved first and second surfaces align with axis A, when their curved second surface abuts against the inner or outer surface of the stator body. The curved first surface may be greater or smaller than the curved second surface. Each of the stator sheets can have the shape of an angular segment of a hollow cylinder. The angular segment can have a thickness d smaller than the inner radius of the hollow cylinder. The stator sheets are arranged to be stacked and the stack formed from these stator sheets can extend along an arc B of the circular helix.

Within the concept of the present invention, "materially connected" includes that the respective two members are connected by an adhesive, by soldering and by welding. "Materially connected" further includes that the two members are integrally formed as a single body, which can be achieved by casting, moulding and primary forming.

Preferred embodiments

Preferred embodiments explained in the following can be combined with each other, advantageously, unless stated otherwise.

Preferably, the electrical rotating machine is a motor or a generator. The electrical rotating machine can be arranged for a power plant or for driving rotating applications or for driving a facility. It can be used advantageously for a new and for refurbishing an existing power plant or superordinate plant or facility. Particularly, the electrical rotating machine is suitable for a wind turbine installation and for being driven by diesel engine, a gas turbine or a water turbine. Particularly, the electrical rotating machine is suitable for driving rotating applications in superordinate machines and equipment.

Preferably, the helix angle $\alpha$ of the circular helix is in the range of -10° to 10° excluding 0°. The absolute value of a helix angle $\alpha$ of the circular helix can be greater than 0° and less than 10°, particularly less than 5°. The helix angle $\alpha$ of the circular helix can be greater than 0° and less than 10°, particularly less than 5° (first range). Alternatively, the helix angle $\alpha$ can be greater than -10° and less than 0°, particularly greater than -5° (second range). The above effect is also achieved if the helix angle $\alpha$ falls in the second range.

According to a preferred embodiment, each of the curved stator sheets has a curved first surface arranged to face the rotor and following a circumference about axis A, a curved second surface abutting against the inner or outer surface of the stator body and/or two parallel lateral surfaces spaced apart by a thickness d of the stator sheet. Each of the stator sheets can have the shape of an annular segment of a hollow cylinder. The curved first and second surfaces, particularly their centres, can be concentric. The curved stator sheets can be arranged and shaped such that their centres align with axis A, when their curved second surface abuts against the inner or outer surface of the stator body. The curved first surface may be greater or smaller than the curved second surface. This may simplify arranging the second of the stator sheets between the first and third stator sheets.

In another preferred embodiment, some of the stator sheets form a first stack of stator sheets, the first stack following or extending along an arc B of the circular helix. The first stack may have additional stator sheets. The rotating machine can have a second stack of stator sheets, the second stack also extending along an arc of a circular helix. The first and second stack can be arranged adjacent to each other. In the second stack of stator sheets, a fifth of the stator sheets can be arranged between a fourth and a sixth of the stator sheets and can touch the fourth and sixth stator sheets. This may improve the output of the rotating machine.

Another preferred embodiment further comprises at least a second guiding element. The guiding elements have the same helix angle. Generally, the guiding elements can have the shape of a curved bar. The guiding elements are, preferably evenly, spaced apart from each other and have different angular positions $\beta$ with respect to axis A. The stator can have three or more spaced apart guiding elements. The stator can have two or more guiding elements per stack of stator sheets such that each of the stator sheets, having two guiding slots, can accept two or more guiding elements. With several guiding elements, the stator's geometry generally resembles that of a helical gear. This may allow to arrange two stator sheets or two stacks of stator sheets side by side or adjacent to each other or along a circumference of the stator body. The output of the rotating machine can be improved. This may help to save material when producing the stator sheets.

Preferably, the stator sheets have two spaced apart guiding slots and two guiding elements per stator sheet or per stack of stator sheets are connected with the stator body. The angular distance between the two guiding elements matches the angular distance between the two spaced apart guiding slots. Each of the stator sheets can be held on the stator body by two guiding elements. This may improve the durability of the rotating machine. Further, assembling the stator can be simplified.

In a further preferred embodiment, one or more of the guiding elements are mechanically connected with the stator body, particularly bolted or riveted to the stator body. This may improve the durability of the stator and/or may simplify to arrange the sheets on the stator body. If the guiding elements are mechanically connected, bolted or riveted to the stator body, the helix angle $\alpha$ can be changed more easily by removing and reconnecting the guiding elements. The stator sheets could be reused.

Alternatively or additionally, one or more of the guiding elements are materially connected with the stator body, particularly welded or soldered or glued to the stator body. The guiding elements and the stator body can be integrally formed as a single body, which can be achieved by casting, moulding and primary forming. This may improve the durability of the stator and/or may simplify to arrange the sheets on the stator body.

In another preferred embodiment, some of the stator sheets form a second stack of sheets, the second stack also extending along arc B, wherein the second stack is arranged adjacent to the first stack. The first and second stacks have different angular positions with respect to axis A. This may improve the output of the rotating machine.

A preferred embodiment comprises at least a first, a second and a third guiding element. The guiding slot of the first stator sheet accepts the first guiding element connected with the stator body at a first angular position $\beta1$. The guiding slot of the second stator sheet accepts the second guiding element connected at a second angular position $\beta2$ greater than $\beta1$. The third stator sheet's guiding slot accepts the third guiding element connected at a third angular position $\beta3$ greater than $\beta2$. The angular positions of the guiding elements agree with: $\beta2 - \beta1 = \beta3 - \beta2$. A possible fourth stator sheet is arranged adjacent to the first stator sheet, forms a first layer of sheets with the first stator sheet, touches the second stator sheet and the guiding slot of the fourth stator sheet accepts the third guiding element. In case the stator sheets have two spaced apart guiding slots each, none of the guiding slots of the first stator sheet accepts the third guiding element, none of the guiding slots of the second stator sheet accepts the first guiding element and none of the guiding slots of the third stator sheet accepts the first or second guiding elements. In essence, the stator sheets are arranged to resemble a brick wall. Because of this arrangement of stator sheets, the embodiment may offer reduced eddy currents.

One or more of the guiding elements of another preferred embodiment have an essentially triangular, trapezoidal or rectangular cross section and an outer surface arranged to abut on the inner or outer surface of the stator body. This may simplify to arrange the sheets on the stator body.

According to another preferred embodiment, each stator sheet has several recesses extending essentially radially from the first surface and arranged for accepting stator windings. The recesses are spaced along the first surface in a circumferential direction about axis A, preferably regularly by a pitch. The pitch can be given by a pitch angle (with respect to axis A) between the start of a first recess to the start of an adjacent recess. This may help to arrange stator windings on the stator. Preferably, the rotating machine comprises several stator windings, which are accepted in the recesses of the stator sheets. The durability of the stator during operation may be improved. The limited helix angle may contribute to easier mounting of stator windings. Preferably, some of the recesses of one or more of the stator sheets accept or hold wires of two separate stator windings. This may improve the output of the rotating machine.

In another preferred embodiment, the curved first surface and two adjacent recesses limit an essentially radial projection, wherein the projection has an arc length w measured in a circumferential direction about axis A. The arc length w is less than thickness d * tan (helix angle $\alpha$):

$$w < d * \tan (\alpha).$$

The helix angle can be directly proportional to arc length w and directly proportional to the height of a stack of stator sheets. The helix angle can vary depending on the height of the stack of stator sheets. This can help to achieve a greater flux density along the length of the rotating machine. A cogging torque can be avoided.

A line C parallel to axis A can run through a projection of the first stator sheet, a projection of the second stator sheet and a projection of the third stator sheet. When some of the stator sheets form a stack arranged on the stator body, there is a continuous overlap of metal or copper in the entire stator. The arc length w and the skewed guiding elements contribute to this continuous overlap of metal or copper. This can help to achieve a uniform flux density along the length of the rotating machine. A cogging torque can be avoided.

A further preferred embodiment comprises a sensor from the following group including an air gap sensor, a temperature sensor and a vibration sensor. The sensor can be electrically connected with a control unit of the rotating machine such that the control unit can receive a signal from the sensor. Based on the signal, the control unit can alter the operational state of the rotating machine. A signal from the air gap monitoring sensor can indicate an annular clearance between the rotor and the stator. Based on this signal, particularly if the signal indicates that a least clearance is underrun, the control unit can stop the operation of the rotating machine. A signal from the temperature sensor can indicate a temperature of the stator. Based on this signal, particularly if the signal indicates that the stator has a first temperature, the control unit can generate an error code. If the signal indicates that the stator temperature exceeds a second temperature greater than the first temperature, the control unit can stop the operation of the rotating machine. A signal from the vibration sensor can indicate vibrations occurring during operation of the rotating machine. Based on this signal, particularly if the signal indicates that the vibrations reach a first limit, the control unit can generate an error code. If the signal indicates that the vibrations exceed a second limit greater than the first limit, the control unit can stop the operation of the rotating machine.

Another preferred embodiment comprises an end panel which is mechanically connected with the stator body and abuts against one of the stator sheets. The end panel can be arranged adjacent to an end of the stator body. When connected with the stator body, the end panel can urge the stator sheets of one or more of the stacks towards each other. This can help to prevent a stack of stator sheets from disassembling. Further, the durability of the stator during operation may be improved.

One or more of the guiding elements of another preferred embodiment have an undercut, preferably adjacent to the stator body. A protrusion arranged for engaging with the undercut extends into the guiding slot of some of the stator sheets, preferably adjacent to their second surface. One or more of the guiding elements can be shaped to form dovetail joints with guiding slots of stator sheets. The durability of the stator during operation may be improved. Arranging stator sheets on the stator body may be simplified.

In a further preferred embodiment, the guiding elements are connected with the outer surface of the stator body. This may offer the advantage of easier dynamic balancing of the rotor. The rotor and its bearings can be more accessible, particularly during maintenance or repair.

A preferred embodiment further comprises the steps

$S_4$ manufacturing one of the curved stator sheets with a curved first surface arranged to face the rotor and following a circumference about axis A, a curved second surface abutting against the inner or outer surface of the stator body and/or two parallel lateral surfaces spaced apart by a thickness d of the stator sheet,

S5 processing the stator sheet to obtain several recesses arranged for accepting stator windings, extending essentially radially from the first surface and spaced along the first surface in a circumferential direction about axis A, and to obtain at least one essentially radial projection limited by the curved first surface and two adjacent recesses, wherein the projection has an arc length w measured in a circumferential direction about axis A, the arc length w being less than thickness d * tan (helix angle $\alpha$):

$$w < d * \tan (\alpha),$$

preferably

S6 deburring one or more of the recesses.

The insulation of the stator windings is less affected after step S6. This may help to improve the durability of the stator during operation. The helix angle can be directly proportional to arc length w and directly proportional to the height of a stack of stator sheets. The helix angle can vary depending on the height of the stack of stator sheets.

A line C parallel to axis A can run through a projection of the first stator sheet, a projection of the second stator sheet and a projection of the third stator sheet. When some of the stator sheets form a stack arranged on the stator body, there is a continuous overlap of metal or copper in the entire stator. The arc length w and the skewed guiding elements contribute to this continuous overlap of metal or copper. This can help to achieve a uniform flux density along the length of the rotating machine. A cogging torque can be avoided.

Another preferred embodiment comprises one or more of the steps:

S7 arranging a stator winding in one of the recesses,

S8 mechanically connecting an end panel with the stator body, and/or

S9 impregnating the stator, particularly with a resin.

This may help to improve the durability of the stator during operation.

In another preferred embodiment, the torque or the eddy currents of the electrical rotating machine are measured while operating the electrical rotating machine (step S12), particularly after installing the electrical rotating machine in a power plant or another facility (step S11). Based on the result of step S12, particularly if the torque or eddy currents measured during step S12 are found not to be satisfactory, the helix angle of the guiding elements is changed (step S13), particularly to improve the torque or to reduce the eddy currents. Steps S2, S3 and/or S12 can be performed after step S13. A further execution of step S12 after step S13 can provide the technician with feedback.

A preferred method to operate a rotating machine as described above includes the steps:

S20    reading a signal from the air gap sensor of the stator, which signal is proportionate to an annular clearance between the outer surface of the rotor and the stator, with an electrically connected control unit of the rotating machine, particularly during operation of the rotating machine,

S21    stopping the operation of the rotating machine by the control unit, if the signal indicates that a least annular clearance between the rotor and the stator is underrun.

This method can help to render the rotating machine's operation safer.

Another preferred method to operate a rotating machine as described above includes the steps:

S22    reading a signal from the temperature sensor of the stator, which signal is proportionate to a temperature of the stator, with the electrically connected control unit of the rotating machine, particularly during operation of the rotating machine,

S23    generating an error code by the control unit, if the signal indicates that the stator has a first temperature,

S24    stopping the operation of the rotating machine by the control unit, if the signal indicates that the stator temperature exceeds a second temperature greater than the first temperature.

This may help to avoid the rotating machine being damaged.

A further preferred method to operate a rotating machine as described above includes the steps:

S25    reading a signal from the vibration sensor of the stator, which signal is proportionate to vibrations occurring during operation of the rotating machine, with the electrically connected control unit of the rotating machine during operation of the rotating machine,

S26    generating an error code by the control unit, if the signal indicates that that the vibrations reach a first limit of vibrations,

S27    stopping the operation of the rotating machine by the control unit, if the signal indicates that the vibrations exceed a second limit of vibrations greater than the first limit of vibrations.

This can aid to reduce wear of the rotating machine.

Advantageously, a power plant comprises an electrical rotating machine as described above. The power plant has a power source or rotational engine arranged to drive the rotating machine's rotor. The power source can be connected with the rotating machine to provide rotational power or torque to the rotating machine's rotor. The power source can be chosen from the following group including a combustion engine, a diesel engine, a gas turbine, a water turbine and a wind turbine.

Advantageously, a plant or facility comprises an electrical rotating machine as described above, wherein the electrical rotating machine is arranged to drive another part of the plant or facility to rotate and is mechanically connected with the other part of the plant or facility.

Exemplary embodiments

Further advantages become apparent to the skilled person from the following exemplary embodiments.

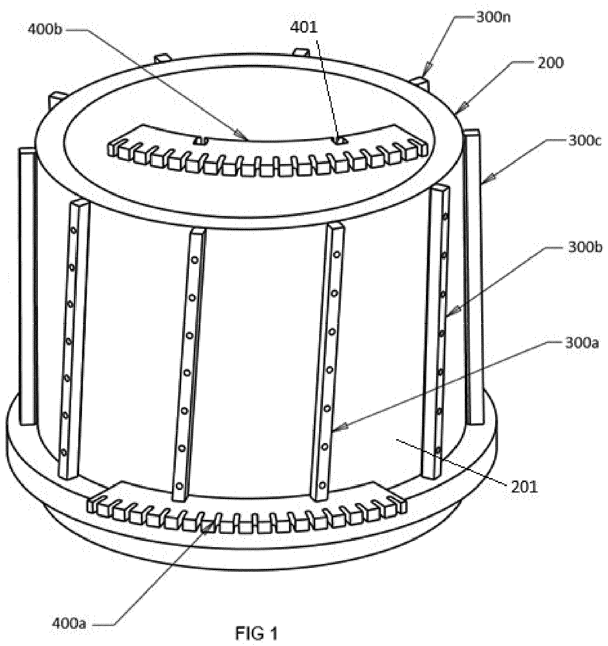

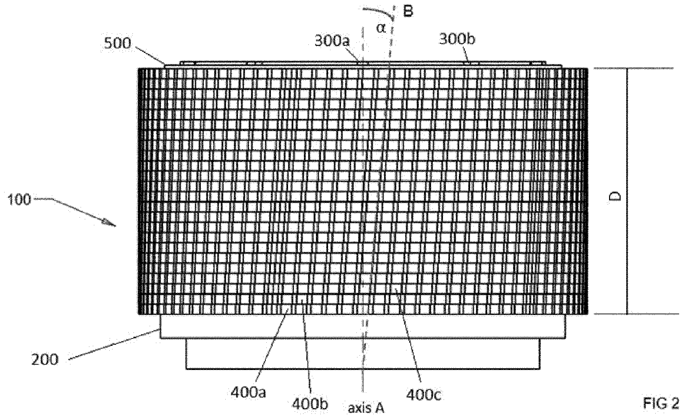

Fig. 1 schematically shows an incomplete stator of an exemplary rotating machine particularly arranged to form an electrical generator, particularly of a wind turbine installation. The stator comprises an essentially cylindrical stator body 200 extending along a longitudinal axis A and ten guiding elements 300, 300a, 300b, 300c, 300n. The guiding elements are mechanically connected with an outer surface 201 of the stator body at different angular positions $\beta$ about axis A. The guiding elements extend along an arc B of a circular helix, which extends along axis A. The arc B of the cylindrical helix is indicated by a dashed line in fig. 2. The helix angle $\alpha$ of the circular helix can be greater than 0° and less than 10°, preferably less the 5°. Alternatively, the helix angle $\alpha$ can be greater than 10° and less than 0°, preferably greater than -5°. Further, the electrical rotating machine has several curved stator sheets 400a, 400b, each having a guiding slot 401 accepting one of the guiding elements. In the incomplete state during step S3, the stator lacks further stator sheets. The stator is arranged to be inserted into the rotor (not shown). Preferably, the rotor can be driven by a wind turbine rotor of a wind turbine installation.

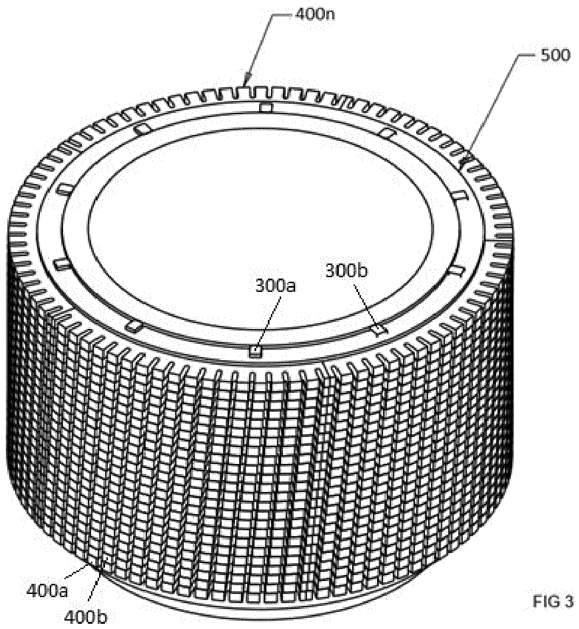

Fig. 2 shows the stator 100 of fig. 1 after steps S3 and S8. The stator sheets are arranged in five stacks of stator sheets and the stator sheets of each stack accept two of the guiding elements. The second stator sheet 400b is arranged between the first 400a and third stator sheets 400c. The end panel 500 is mechanically connected with the stator body 200. The explanations concerning fig. 1 also apply. The arc B of the cylindrical helix is indicated by a dashed line. The helical angle $\alpha$ of the circular helix between axis A and arc B is less than 5°. A line C (not shown) parallel to axis A runs through a projection of the first stator sheet, a projection of the second stator sheet and a projection of the third stator sheet. When some of the stator sheets form a stack arranged on the stator body, there is a continuous overlap of metal or copper in the entire stator. This can help to achieve a uniform flux density along the length of the rotating machine. Fig. 3 shows the stator of fig. 2 from a different perspective and the five stacks of stator sheets and ten guiding elements are visible. The stator sheets of each stack accept two of the guiding elements.

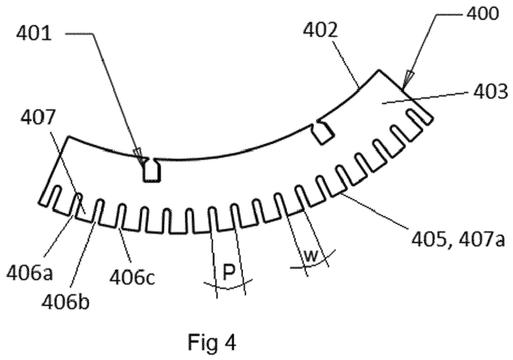

Fig. 4 schematically shows one of the curved stator sheets 400. It has a curved first surface 405 arranged to face the rotor (not shown) and following a circumference about axis A, a concentric curved second surface 402 arranged to abut against the outer surface of the stator body and two parallel lateral surfaces 403 spaced apart by a thickness d of the stator sheet. The stator sheet has two guiding slots 401. Protrusions arranged for engaging with an undercut of a guiding element extend into the guiding slot 401 adjacent to the second surface 402. This can help to improve the durability of the stator during operation.

Several recesses 406a, 406b, 406c extend from the first surface 405 and are spaced apart along the first surface by pitch p. The adjacent recesses 406a, 406b and the first surface 405 limit an essentially radial projection 407. The projection has an arc length w less than thickness d * tan (helix angle $\alpha$). When several of the stator sheets as shown form a stack arranged on the stator body, there is a continuous overlap of metal or copper in the entire stator, as shown by fig. 2. This can help to achieve a uniform flux density along the length of the rotating machine.

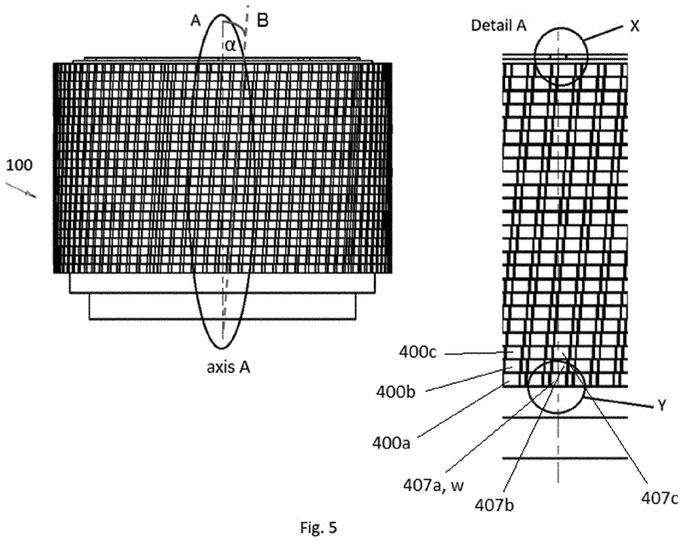

Fig. 5 shows the stator of fig. 2 and an enlarged detail. On the left hand side of fig. 5, the arc B is indicated by a dashed line. The helical angle $\alpha$ of the circular helix measured between axis A and arc B is less than 5°. The guiding elements and the stacks of stator sheets also extend along the arc B but at different angular positions $\beta$ about axis A. The second stator sheet 400b is arranged between the first 400a and third stator sheets 400c. Due to the skewed guiding elements and the guiding slots, the projections 407a, 407b, 407c have different angular position, as shown. As the respective arc length w is less than thickness d * tan (helix angle $\alpha$), there is a continuous overlap of metal or copper in the entire stator. This can help to achieve a uniform flux density along the length of the rotating machine.

The guiding elements connected to the stator body may simplify arranging the second stator sheet between the first and third stator sheet. The guiding elements can also serve to achieve and maintain the intended skew or relative position of the second stator sheet between the first and third stator sheet. A skewed stack formed from the stator sheets with the guiding element and extending along arc B can remain on the stator body. This may improve the quality of the electrical rotating machine, reduce the cost and/or reduce torque variations. The limited helix angle may contribute to easier mounting of stator windings.

As mentioned before, the helix angle $\alpha$ of the circular helix could be greater than -10° and less than 0°, preferably less the -5°, and the respective rotating machine would offer the same advantage.

Reference signs

100 stator

200 stator body

201 inner or outer surface of the stator body

300, 300a, 300b, 300c, 300d, 300n guiding element

400, 400a, 400b, 400c stator sheet

401 guiding slot

402 curved second surface of stator sheet

403, 404 lateral surface of stator sheet

405 curved first surface of stator sheet

406, 406a, 406b, 406c recess of stator sheet

407 projection of stator sheet

500 end panel

A longitudinal axis of stator body, axis of circular helix

B arc of circular helix

d thickness of stator sheet

p pitch, angular pitch of recesses 406

w arc length of projection 407

$\alpha$ helix angle of circular helix

$\beta$ angular position of guiding element with respect to axis A

## Claims

1. Electrical rotating machine, arranged for a power plant or for driving a rotatable machine part, the electrical rotating machine having a rotor and a stator (100), wherein the rotor is arranged to be driven to rotate relative to the stator, the stator comprising
   an essentially cylindrical stator body (200), extending along a longitudinal axis A,
   a guiding element (300, 300a), extending along an arc B of a circular helix, the circular helix extending along axis A, wherein the guiding element is materially and/or mechanically connected with an inner or outer surface (201) of the stator body,
   several curved stator sheets (400), each stator sheet having a guiding slot (401) accepting the guiding element, wherein a second (400b) of the stator sheets is arranged between a first (400a) and a third (400c) of the stator sheets and touches or abuts on the first and third stator sheets.

2. Electrical rotating machine according to claim 1, wherein the absolute value of a helix angle $\alpha$ of the circular helix is greater than 0° and less than 10°.

3. Electrical rotating machine according to one of the preceding claims, wherein each of the stator sheets has a curved first surface (405) arranged to face the rotor and following a circumference about axis A, a curved second surface (402) abutting against the inner or outer surface of the stator body and/or two parallel lateral surfaces (403, 404) spaced apart by a thickness d of the stator sheet.

4. Electrical rotating machine according to one of the preceding claims, wherein some of the stator sheets form a first stack of sheets, the first stack extending along arc B.

5. Electrical rotating machine according to one of the preceding claims, further comprising a second guiding element (300b).

6. Electrical rotating machine according to one of the preceding claims, wherein each of the guiding elements (300, 300a, 300b) is bolted, riveted, welded, soldered or glued to the inner or outer surface of the stator body.

7. Electrical rotating machine according to one of the preceding claims, wherein some of the stator sheets form a second stack of sheets, the second stack also extending along arc B, wherein the second stack is arranged adjacent to the first stack.

8.  Electrical rotating machine according to one of the preceding claims, wherein the guiding element has an essentially triangular, trapezoidal or rectangular cross section and an outer surface arranged to abut on the inner or outer surface of the stator body.

9.  Electrical rotating machine according to one of the preceding claims, wherein each stator sheet has several recesses (406, 406a, 406b, 406c) extending essentially radially from the first surface and arranged for accepting stator windings (600), wherein the recesses are spaced along the first surface in a circumferential direction about axis A, preferably regularly by a pitch.

10. Electrical rotating machine according to claim 9, further comprising several stator windings, which are accepted in the recesses (406, 406a, 406b, 406c), preferably wherein wires of two separate stator windings are arranged in the same recess.

11. Electrical rotating machine according to one of claims 9 to 10, wherein the curved first surface (405) and two adjacent recesses limit an essentially radial projection (407), wherein the projection (407) has an arc length w measured in a circumferential direction about axis A, the arc length w being less than thickness d * tan (helix angle $\alpha$).

12. Electrical rotating machine according to one of the preceding claims, further comprising a sensor from the following group including an air gap sensor, a temperature sensor and a vibration sensor.

13. Electrical rotating machine according to one of the preceding claims, further comprising an end panel (500) mechanically connected with the stator body and abutting against one of the stator sheets.

14. Electrical rotating machine according to one of the preceding claims, wherein the guiding element has an undercut, wherein some of the stator sheets have a protrusion arranged for engaging with the undercut, wherein the protrusion extends into the guiding slot and adjacent to the second surface.

15. Method to manufacture an electrical rotating machine arranged for a power plant or for driving a rotatable machine part, particularly an electric rotating machine according to one of the preceding claims, the electrical rotating machine having a rotor and a stator (100), wherein the rotor is arranged to be driven to rotate relative to the stator particularly by a rotational engine of the power plant, the method including the following steps:

    S1 providing an essentially cylindrical stator body (200), extending along a longitudinal axis A,
    S2 materially and/or mechanically connecting a guiding element (300) with an inner or outer surface (201) of the stator body, the guiding element extending along an arc B of a circular helix, the circular helix extending along axis A,
    S3 arranging several curved stator sheets (400), each stator sheet having a guiding slot (401) arranged for accepting the guiding element, such that a second (400b) of the stator sheets is arranged between a first (400a) and a third (400c) of the stator sheets and touches the first and third stator sheets, and the respective guiding slot accepts the guiding element.

16. Method according to claim 15, wherein the absolute value of a helix angle $\alpha$ of the circular helix is greater than 0° and less than 10°.

17. Method according to one of claims 15 to 16, further comprising:

    S4 manufacturing one of the curved stator sheets with a curved first surface (405) arranged to face the rotor and following a circumference about axis A, a curved second surface (402) abutting against the inner or outer surface of the stator body and/or two parallel lateral surfaces (403, 404) spaced apart by a thickness d of the stator sheet,
    S5 processing the stator sheet to obtain several recesses (406, 406a, 406b, 406c) arranged for accepting stator windings (600), extending essentially radially from the first surface (405) and spaced along the first surface in a circumferential direction about axis A, and to obtain at least one essentially radial projection (407) limited by the curved first surface and two adjacent recesses, wherein the projection has an arc length w measured in a circumferential direction about axis A, the arc length w being less than d * tan (helix angle $\alpha$),

    preferably

S6 deburring one or more of the recesses.

18. Method according to one of claims 15 to 17, further comprising one or more of the following steps:

S7 arranging a stator winding in one or more of the recesses,
S8 mechanically connecting an end panel (500) with the stator body, and/or
S9 impregnating the stator, particularly with a resin.

19. A power plant comprising an electrical rotating machine according to one of the preceding claims, the power plant having a power source or rotational engine arranged to drive the rotor of the electrical rotating machine.

20. A plant comprising an electrical rotating machine according to one of the preceding claims, wherein the electrical rotating machine is arranged to drive another part of the plant to rotate and is mechanically connected with the other part of the plant.

FIG 1

FIG 2

FIG 3

Fig 4

Fig. 5

Europäisches
Patentamt

European
Patent Office

Office européen
des brevets

# EUROPEAN SEARCH REPORT

Application Number

EP 18 19 0025

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 103 051 077 A (GUODIAN UNITED POWER TECH CO) 17 April 2013 (2013-04-17) | 1-10,12, 13,15, 16,18-20 | INV. H02K1/16 H02K1/18 H02K15/02 |
| Y | * paragraph [0020] - paragraph [0025]; figures 1-4 * | 14 | |
| Y | US 2012/074798 A1 (BYWATERS GARRETT L [US] ET AL) 29 March 2012 (2012-03-29) * paragraph [0043] - paragraph [0044]; figures 7A-7C * | 14 | |

TECHNICAL FIELDS
SEARCHED      (IPC)

H02K

The present search report has been drawn up for all claims

| Place of search | Date of completion of the search | Examiner |
|---|---|---|
| The Hague | 25 January 2019 | Zavelcuta, Florin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 19 0025

This annex lists the patent family members relating to the patent documents cited in  the above-mentioned European search report.
The members are as contained in the European Patent Office EDP file on
The European Patent Office is in no way liable for these particulars which are merely given for the purpose of information.

25-01-2019

| Patent document cited in search report | | Publication date | Patent family member(s) | | Publication date |
|---|---|---|---|---|---|
| CN 103051077 | A | 17-04-2013 | NONE | | |
| US 2012074798 | A1 | 29-03-2012 | BR 112013006773 | A2 | 05-07-2016 |
| | | | CA 2812293 | A1 | 29-03-2012 |
| | | | CN 103210565 | A | 17-07-2013 |
| | | | EP 2619881 | A2 | 31-07-2013 |
| | | | US 2012074798 | A1 | 29-03-2012 |
| | | | WO 2012040535 | A2 | 29-03-2012 |

EPO FORM P0459

For more details about this annex : see Official Journal of the European Patent Office, No. 12/82